# EUROPEAN PATENT APPLICATION

(11) **EP 3 686 814 A1**
(43) Date of publication of application: **29.07.2020**
(21) Application number: 19199361.7
(22) Date of filing: 24.09.2019
(51) Int. Cl.: G06N 3/063, G06N 3/04

(54) **HYBRID CPU AND ANALOG IN-MEMORY ARTIFICIAL INTELLIGENCE PROCESSOR**

(30) Priority: 25.01.2019 US 201916258522
(71) Applicant: INTEL Corporation, Santa Clara, CA 95054 (US)
(72) Inventor: YOUNG, Ian, Portland, OR 97229 (US); KRISHNAMURTHY, Ram, Portland, OR 97229 (US); NIKONOV, Dmitri, Beaverton, OR 97007 (US); MANIPATRUNI, Sasikanth, Portland, OR 97229 (US); MATHURIYA, Amrita, Portland, OR 97229 (US)
(74) Representative: Goddar, Heinz J.

(57) **Abstract**

Techniques are provided for implementing a hybrid processing architecture comprising a general-purpose processor (CPU) coupled to an analog in-memory artificial intelligence (AI) processor. A hybrid processor implementing the techniques according to an embodiment includes an AI processor configured to perform analog in-memory computations based on neural network (NN) weighting factors and input data provided by the CPU. The AI processor includes one or more NN layers. The NN layers include digital access circuits to receive data and weighting factors and to provide computational results. The NN layers also include memory circuits to store data and weights, and further include bit line processors and cross bit line processors to perform analog dot product computations between columns of the data memory circuits and the weight factor memory circuits. Some of the NN layers are configured as convolutional NN layers and others are configured as fully connected NN layers, according to some embodiments.

## Description

### BACKGROUND

Artificial intelligence (AI) systems and applications using neural networks are becoming increasingly important in many areas. Neural network processing can be computationally intensive, however, and so various types of hardware accelerators and digital signal processors exist to perform these calculations. There remain, however, a number of non-trivial issues with respect to accelerator systems for neural network (NN) processing.

### BRIEF DESCRIPTION OF THE DRAWINGS

Figure 1 is a top-level block diagram of a hybrid processor, configured in accordance with certain embodiments of the present disclosure.
Figure 2 illustrates a fully connected (all-to-all) network layer.
Figure 3 is a block diagram of an analog in-memory artificial intelligence (AI) processor, configured in accordance with certain embodiments of the present disclosure.
Figure 4 is another block diagram of an analog in-memory AI processor, configured in accordance with certain embodiments of the present disclosure.
Figure 5 illustrates a vectorization process, in accordance with certain embodiments of the present disclosure.
Figure 6 illustrates a pooling process, in accordance with certain embodiments of the present disclosure.
Figure 7 is another block diagram of an analog in-memory AI processor, configured in accordance with certain embodiments of the present disclosure.
Figure 8 illustrates a data representation for the analog in-memory AI processor, in accordance with certain embodiments of the present disclosure.
Figure 9 is a flowchart illustrating a methodology for analog in-memory neural network processing, in accordance with certain embodiments of the present disclosure.
Figure 10 is a block diagram schematically illustrating a computing platform configured to perform AI processing using a hybrid processor, in accordance with certain embodiments of the present disclosure.

Although the following Detailed Description will proceed with reference being made to illustrative embodiments, many alternatives, modifications, and variations thereof will be apparent in light of this disclosure.

### DETAILED DESCRIPTION

As previously noted, there remains a number of non-trivial issues with respect to accelerator systems for neural network (NN) processing, such as those due to bandwidth limitations associated with the transfer of data from the memory to the digital processing unit. In more detail, these accelerators typically need to transfer large quantities of data between off-chip memory and a digital processing unit, and this data transfer requirement can impose a significant bandwidth bottleneck on the operation, causing an undesirable increase in latency and power consumption. Thus, this disclosure provides techniques for implementing a hybrid processing architecture comprising a general-purpose processor, or any desired type of central processing unit (CPU), coupled to an analog in-memory AI processor. The analog in-memory AI processor is configured to perform analog in-memory computations based on NN weighting factors and input data provided by the CPU. The analog in-memory computations are performed in a parallel manner, as analog voltage values are read from the cells of memory circuits of the analog in-memory AI processor. That is to say, the arithmetic processing occurs in the memory circuits as a part of the data fetch. In some embodiments, 512 to 1024 calculations may be performed in parallel for each memory circuit. To this end, the disclosed techniques for analog in-memory processing of the weighting factors and data provide for reduced latency and improved efficiency in AI applications, such as, for example, deep learning networks and inference engines. Numerous embodiments will be apparent.

The disclosed techniques can be implemented, for example, in integrated circuitry on a common substrate, or a chip set. In one such example case, the techniques are implemented in the memory of a computing system or device such as an integrated circuit processor (e.g., on-chip memory or cache), although other embodiments will be apparent. The memory is configured to perform analog in-memory computations. In accordance with an embodiment, a hybrid processor implementing the techniques includes a CPU coupled to an AI processor which is configured to perform analog in-memory computations based on NN weighting factors and input data provided by the CPU. The AI processor includes one or more NN layers. In an embodiment, the NN layers include digital access circuits to receive data and weighting factors and to provide computational results. The NN layers also include memory circuits to store the data and weights, and further include bit line processors and cross bit line processors to perform analog dot product computations between columns of the data memory circuits and the weight factor memory circuits. Some of the NN layers are configured as convolutional NN layers while others may be configured as fully connected NN layers. The CPU is configured to train the AI processor and provide the weighting factors that are generated by such training.

The disclosed techniques are particularly well-suited to AI platforms, but also can be implemented on a broad range of platforms including laptops, tablets, smart phones, workstations, video conferencing systems, gaming systems, smart home control systems, robots, and personal or so-call virtual assistants (such as those that respond to a wake-up phrase). In a more general sense, the techniques can be implemented in any number of processor-based systems that include one or more processors and memory configured for analog in-memory computations. Numerous applications that call for or otherwise entail AI processing, including visual, audio, and other applications, can benefit from the techniques provided, as will be appreciated.

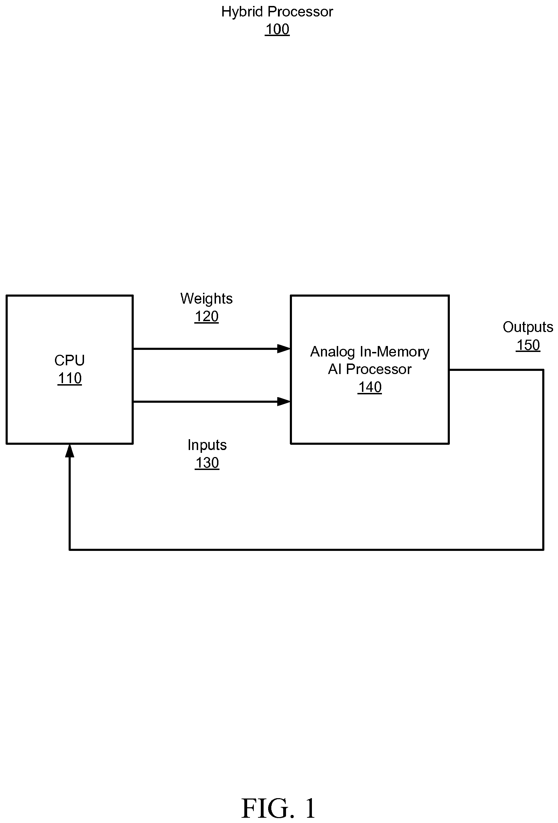

Figure 1 is a top-level block diagram of a hybrid processor 100, configured in accordance with certain embodiments of the present disclosure. A CPU 110 is shown as coupled to an analog in-memory AI processor 140. The CPU 110 may be a general-purpose processor or any other suitable type of processor. In some embodiments, the CPU 110 may be an x86 architecture processor, which is to say a processor implementing an x86 instructions set or some portion thereof.

The analog in-memory AI processor 140 is configured to receive weighting factors 120 and input data 130 (e.g., an image) from the CPU 110 through digital access circuits, and to perform analog neural network processing based on those weights and data. The analog in-memory AI processor 140 comprises one or more NN layers, which may be configured as convolutional neural network (CNN) layers and/or full connected (e.g., all-to-all) NN layers, in any combination, as will be described in greater detail below. The results of the NN processing (e.g., an image classification or recognition) are provided back to the CPU 110 as outputs 150, also through digital access circuits.

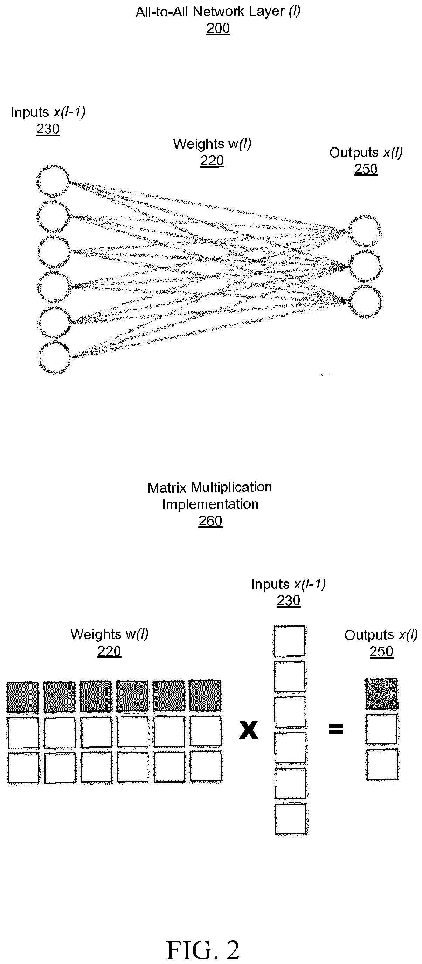

Figure 2 illustrates an example of a fully connected (all-to-all) network layer 200 and a matrix multiplication implementation 260 of that layer. The network layer (*l*) accepts inputs *x(l-1)* 230 from a previous layer *l-1,* and applies weights *w(l)* 220 to each connection between inputs *x(l-1)* 230 and outputs *x(l)* 250. The network can be implemented as a matrix multiplication operation as shown in 260, where each element of the output 250 is calculated as a dot product between a row of the weights 220 and a column of the inputs 230.

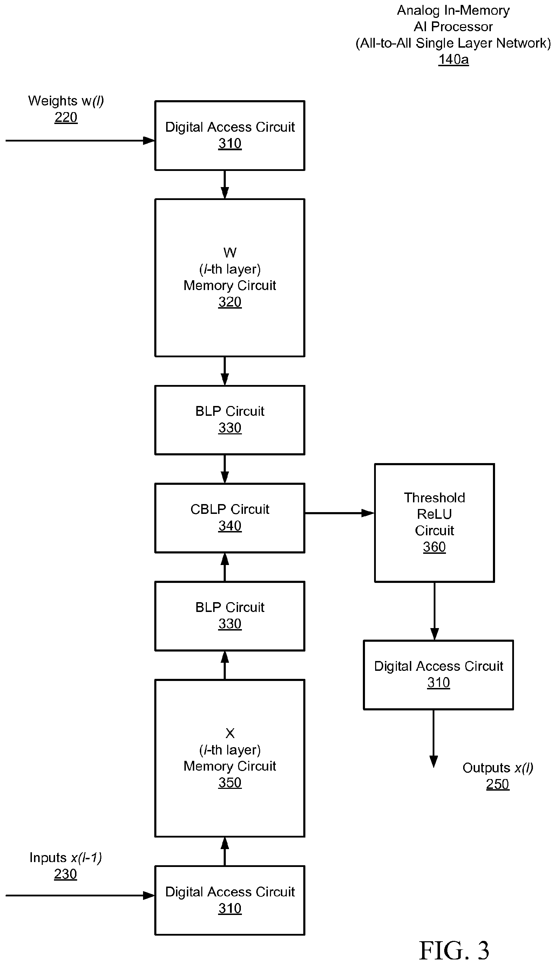

Figure 3 is a block diagram of an analog in-memory AI processor 140a, configured in accordance with certain embodiments of the present disclosure. The AI processor 140a is configured to implement a fully connected (all-to-all) single neural network layer (/). The AI processor 140a is shown to include digital access circuits 310, a first memory circuit 320, a second memory circuit 350, first and second bit line processor (BLP) circuits 330, a cross bit line processor (CBLP) circuit 340, and a threshold Rectified Linear Unit (ReLU) circuit 360.

Digital access circuits 310 are configured to receive, from the CPU, weighting factors *w(l)* 220 which correspond to the weights 120, or a subset of those weights associated with the NN layer *(l).* Digital access circuits 310 are also configured to receive input data associated with the NN layer *(l).* The input data can be input 130 from the CPU, or a subset of that input data associated with the NN layer (*l*). In some embodiments, the input data can be output from another (e.g., previous) NN layer *x(l-1)*230. Digital access circuits 310 are also configured to provide outputs *x(l)* 250 back to the CPU or to another (e.g., next) NN layer.

The first memory circuit 320 is configured to store the weighting factors 220 associated with the NN layer (*l*) and the second memory circuit 350 is configured to store the data associated with the NN layer (*l*). In some embodiments, the memory circuits 320 and 350 are implemented as static random access memory (SRAM), wherein each bit of the weights and data may be stored as an SRAM cell. Other embodiments may employ other memory technologies, whether volatile or non-volatile, such as dynamic RAM (DRAM), resistive RAM (RRAM), and magnetoresistive RAM (MRAM). Further note that the memory circuits 320 and 350 may be part of, for example, an on-chip processor cache or a computing system's main memory board, or any other memory facility.

The first BLP circuit 330, associated with the first memory circuit 320, is configured to generate a first sequence of vectors of analog voltage values. Each of the first sequence of vectors is associated with a column of the first memory circuit. For example, the analog voltage values are proportional to (or otherwise representative of) the weights in the column.

The second BLP circuit 330, associated with the second memory circuit 350, is configured to generate a second sequence of vectors of analog voltage values. Each of the second sequence of vectors is associated with a column of the second memory circuit. For example, the analog voltage values are proportional to (or otherwise representative of) the data words in the column. In some embodiments, the analog voltage values of the first sequence of vectors and the second sequence of vectors are generated in parallel.

The CBLP circuit 340 is configured to calculate a sequence of analog dot products. Each of the analog dot products calculated between one of the first sequence of vectors and one of the second sequence of vectors. The analog dot products correspond to an element of a matrix multiplication product of the weights and data, as shown for example as 260 in Figure 2. In some embodiments, the analog dot products, of the sequence of analog dot products, are calculated in parallel.

In some embodiments, the CBLP circuit 340 performs the analog multiply portion of the dot product operation by timing current integration over a capacitor. Circuit 340 may be configured as a capacitor in series with a switch. The voltage sensed on the bit line, as one of the multiplicand inputs, generates a current through the capacitor, and the other multiplicand is employed to control the timing of the series switch such that the switch is turned on for a duration proportional to the second multiplicand. The CBLP circuit 340 performs the analog summation portion of the dot product operation by charge accumulation. For example, in some embodiments, the outputs of the multiplier are provided to a summing capacitor which generates the analog dot product.

The threshold Rectified Linear Unit (ReLU) circuit 360 is configured to perform thresholding on the sequence of analog dot products, using known techniques in light of the present disclosure.

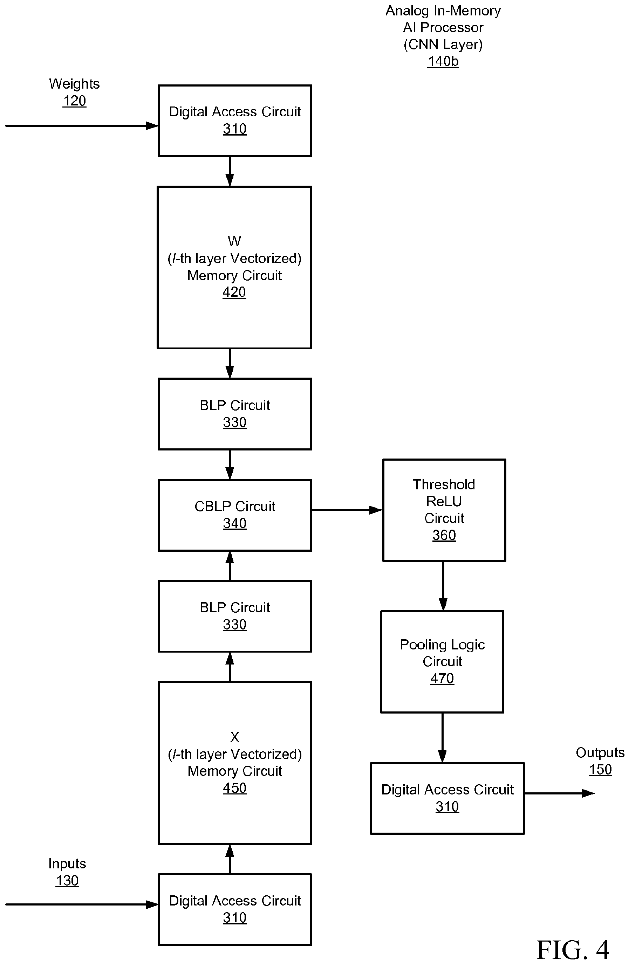

Figure 4 is another block diagram of an analog in-memory AI processor 140b, configured in accordance with certain other embodiments of the present disclosure. The AI processor 140b is configured to implement a CNN layer (/). The AI processor 140b is shown to include digital access circuits 310, a first memory circuit 420, a second memory circuit 450, first and second bit line processor (BLP) circuits 330, cross bit line processor (CBLP) circuit 340, threshold Rectified Linear Unit (ReLU) circuit 360, and pooling logic circuit 470.

The operation of AI processor 140b is similar to that of AI processor 140a, as described above. Digital access circuits 310 are configured to receive weights 120 and input data 130 from the CPU or from a previous NN layer, and to provide output results 150 back to the CPU or to the next NN layer, as previously described.

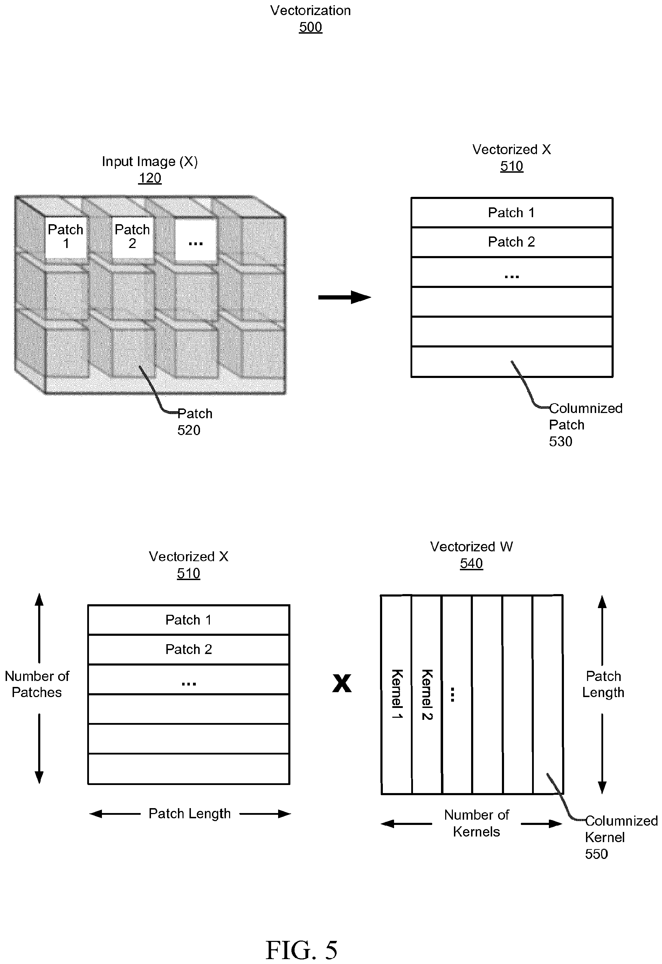

The first memory circuit 420 is configured to store the weights 120 associated with the CNN layer (*l*) in vectorized form, as will be explained below in connection with Figure 5. The second memory circuit 450 is configured to store the input data 120 associated with the CNN layer (*l*), also in vectorized form.

The first and second BLP circuits 330 are configured to generate sequences of vectors of analog voltage values associated with columns of the first and second memory circuits respectively, as previously described. In some embodiments, the analog voltage values of the first sequence of vectors and the second sequence of vectors are generated in parallel.

The CBLP circuit 340 is configured to calculate a sequence of analog dot products. Each of the analog dot products calculated between one of the first sequence of vectors and one of the second sequence of vectors, as previously described. In some embodiments, the analog dot products, of the sequence of analog dot products, are calculated in parallel.

The threshold Rectified Linear Unit (ReLU) circuit 360 is configured to perform thresholding on the sequence of analog dot products.

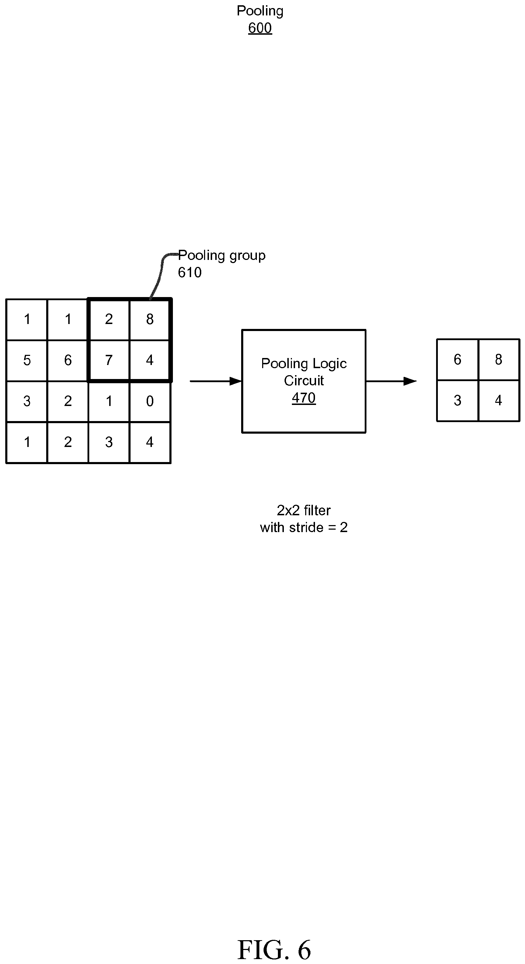

The pooling logic circuit 470 is configured to perform maximum pooling on the thresholded sequence of analog dot products output from the threshold ReLU circuit 360, to reduce the dimensions of the matrices of data. Figure 6 illustrates the pooling process 600, in accordance with certain embodiments of the present disclosure. In this example, a 4x4 matrix is reduced in size to a 2x2 matrix using a 2x2 filter with a stride of 2, to select the maximum value in each pooling group 610. In some embodiments, the pooling is accomplished through the generation of indices, in the vectorized index space, to select the maximum values in each pooling group for use in writing the data to the digital access circuit 310.

Figure 5 illustrates a vectorization process 500, in accordance with certain embodiments of the present disclosure. In this example, the input data 120 is in the form of a two-dimensional input image X. The image X is broken up into smaller two-dimensional patches 520. The patches are then vectorized into linear vectors, or columnized patches 530, for storage in the second memory circuit 450 as a vectorized X 510. A similar process is applied to the weights which are vectorized into linear vectors, or columnized kernels 550, for storage in the first memory circuit 420 as a vectorized W 540, in transposed form relative to the vectorized X 510.

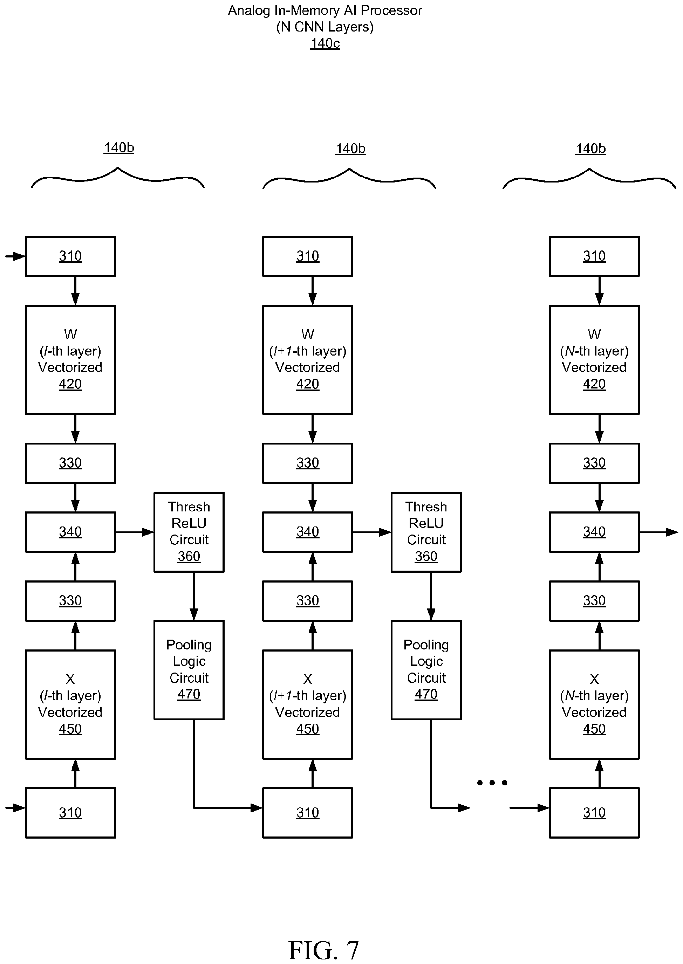

Figure 7 is another block diagram of an analog in-memory AI processor 140c, configured in accordance with certain other embodiments of the present disclosure. AI processor 140c is shown to implement a multi-layer layer CNN comprising N CNN layers 140b. The multi-layer layer CNN is mapped to an in-memory data path. The output of each layer is coupled to the next layer through a digital access circuit 310. In some embodiments, AI processor 140c may also include one or more fully connected layers 140a coupled in serial with the CNN layers 140b to implement a neural network of any desired complexity.

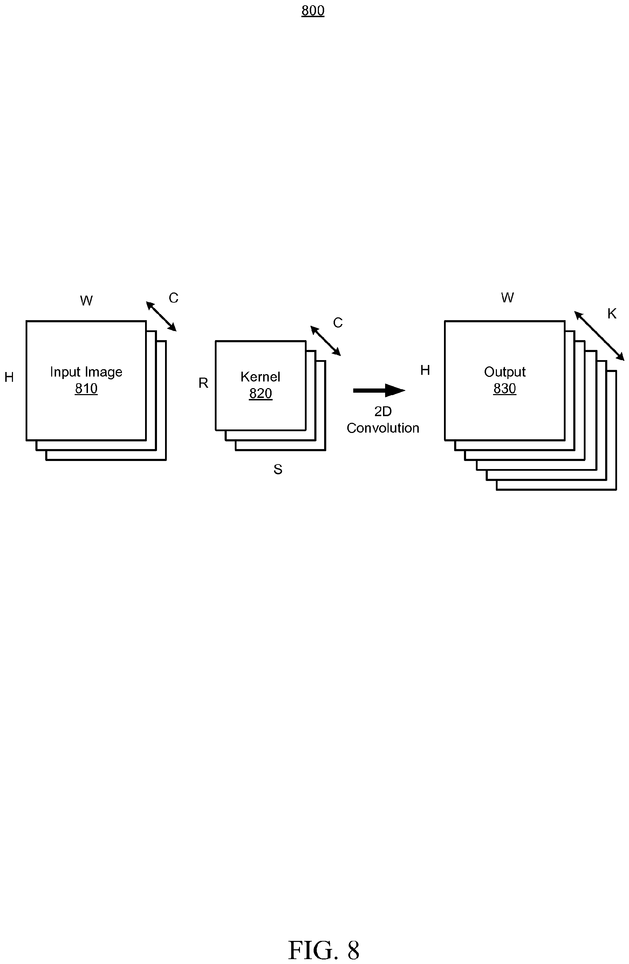

Figure 8 illustrates a data representation 800 for the analog in-memory AI processor 140, in accordance with certain embodiments of the present disclosure. Any number (N) of input images 810 may be processed by the AI processor 140 in an iterative or repetitive manner. Each image 810 is shown to be of height H and width W, comprising C channels (e.g., red, green, and blue) or input feature maps. The kernel 820 (e.g., weighting factors) is shown to be of height R and width S, and also comprising C channels (the same dimension as the input feature maps). The output 830 (e.g., the result of two-dimensional convolution of one image) is shown to be of height H and width W, comprising K output feature maps.

The following pseudocode provides a simplified example (ignoring boundary conditions and strides/padding) of vectorization and pooling index generation for the processing of the N images to generate the corresponding output:

```
          For (n = 1 to N) // N input images
            For (k = 1 to K) //K output feature maps
              For (h = 1 to H) // output height
                For (w = 1 to W) // output width
                  For (c= 1 to C) // C input feature maps (channels)
                    For (r= 1 to R) // kernel height
                      For (s= 1 to S) // kernel width
                      {
                      } Output(n, k, h, w) += Weight(k, c, r, s) * Input(n, c, h+r, w+s)
```

The example pseudocode vectorizes the matrices W (weights or kernels) and X (input data), allowing for the control of the size of the convolution matrix. Larger kernels enable conversion to a fully connected artificial neural network.

### Methodology

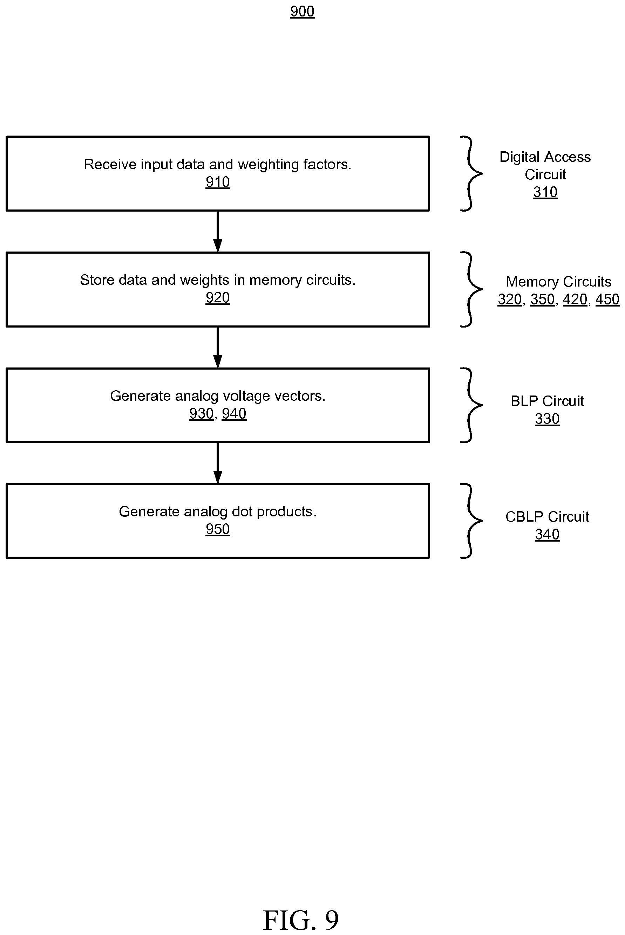

Figure 9 is a flowchart illustrating an example method 900 for analog in-memory neural network processing, in accordance with certain embodiments of the present disclosure. As can be seen, the example method includes a number of phases and sub-processes, the sequence of which may vary from one embodiment to another. However, when considered in the aggregate, these phases and sub-processes form a process for efficient analog in-memory neural network processing, in accordance with certain of the embodiments disclosed herein. These embodiments can be implemented, for example, using the system architecture illustrated in Figures 1, 3, 4, and 7, as described above. However other system architectures can be used in other embodiments, as will be apparent in light of this disclosure. To this end, the correlation of the various functions shown in Figure 9 to the specific components illustrated in the other figures is not intended to imply any structural and/or use limitations. Rather, other embodiments may include, for example, varying degrees of integration wherein multiple functionalities are effectively performed by one system. For example, in an alternative embodiment a single module having decoupled sub-modules can be used to perform all of the functions of method 900. Thus, other embodiments may have fewer or more modules and/or sub-modules depending on the granularity of implementation. In still other embodiments, the methodology depicted can be implemented as a computer program product including one or more non-transitory machine-readable mediums that when executed by one or more processors cause the methodology to be carried out. Numerous variations and alternative configurations will be apparent in light of this disclosure.

As illustrated in Figure 9, in an embodiment, method 900 for analog in-memory neural network processing commences by receiving, at operation 910, input data and weighting factors, from a CPU or general-purpose processor, through a digital access circuit.

Next, at operation 920, the input data is stored in a first memory circuit and the weighting factors are stored in a second memory circuit. The memory circuits are configured for analog in-memory computations.

At operation 930, a first sequence of vectors of analog voltage values is generated by a BLP associated with the first memory circuit. Each of the first sequence of vectors is associated with a column of the first memory circuit.

At operation 940, a second sequence of vectors of analog voltage values is generated by a BLP associated with the second memory circuit. Each of the second sequence of vectors is associated with a column of the second memory circuit.

At operation 950, a sequence of analog dot products is calculated by a CBLP. Each of the analog dot products is calculated between one of the first sequence of vectors and a corresponding one of the second sequence of vectors.

Of course, in some embodiments, additional operations may be performed, as previously described in connection with the system. For example, the analog voltage values of the first and second sequence of vectors may be generated in parallel. Further, the analog dot products, of the sequence of analog dot products, may also be calculated in parallel. Additionally, in some embodiments, results of the CBLP calculations may be provided back to the CPU through the digital access circuit. In some further embodiments, ReLU thresholding and maximum pooling operations may be performed on the results of the CBLP calculations.

### Example System

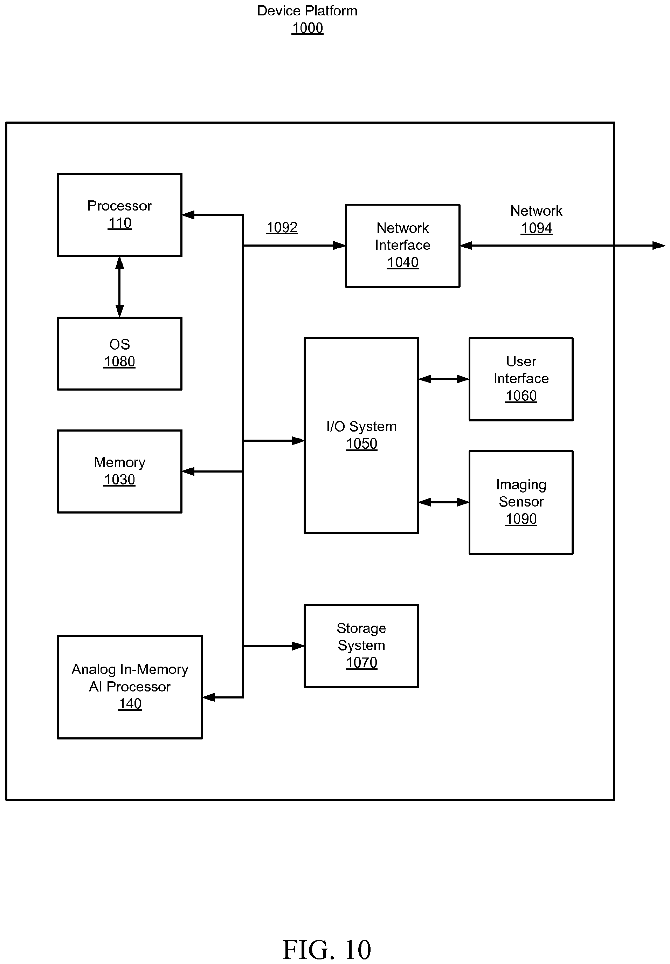

Figure 10 illustrates an example platform 1000 to perform AI processing using a hybrid processor, configured in accordance with certain embodiments of the present disclosure. In some embodiments, platform 1000 may be hosted on, or otherwise be incorporated into a personal computer, workstation, server system, smart home/smart car management system, laptop computer, ultra-laptop computer, tablet, touchpad, portable computer, handheld computer, palmtop computer, personal digital assistant (PDA), cellular telephone, combination cellular telephone and PDA, smart device (for example, smartphone or smart tablet), mobile internet device (MID), messaging device, data communication device, wearable device, embedded system, and so forth. Any combination of different devices may be used in certain embodiments.

In some embodiments, platform 1000 may comprise any combination of a processor 110, a memory 1030, an analog in-memory AI processor 140 including memory circuits configured to perform analog in-memory neural network calculations, a network interface 1040, an input/output (I/O) system 1050, a user interface 1060, an imaging sensor 1090, and a storage system 1070. As can be further seen, a bus and/or interconnect 1092 is also provided to allow for communication between the various components listed above and/or other components not shown. Platform 1000 can be coupled to a network 1094 through network interface 1040 to allow for communications with other computing devices, platforms, devices to be controlled, or other resources. Other componentry and functionality not reflected in the block diagram of Figure 10 will be apparent in light of this disclosure, and it will be appreciated that other embodiments are not limited to any particular hardware configuration.

Processor 110 can be any suitable processor, and may include one or more coprocessors or controllers, such as an audio processor, a graphics processing unit, or hardware accelerator, to assist in control and processing operations associated with platform 1000. In some embodiments, the processor 110 may be implemented as any number of processor cores. The processor (or processor cores) may be any type of processor, such as, for example, a microprocessor, an embedded processor, a digital signal processor (DSP), a graphics processor (GPU), a network processor, a field programmable gate array or other device configured to execute code. The processors may be multithreaded cores in that they may include more than one hardware thread context (or "logical processor") per core. Processor 110 may be implemented as a complex instruction set computer (CISC) or a reduced instruction set computer (RISC) processor. In some embodiments, processor 110 may be configured as an x86 instruction set compatible processor.

Memory 1030 can be implemented using any suitable type of digital storage including, for example, flash memory and/or random-access memory (RAM). In some embodiments, the memory 1030 may include various layers of memory hierarchy and/or memory caches as are known to those of skill in the art. Memory 1030 may be implemented as a volatile memory device such as, but not limited to, a RAM, dynamic RAM (DRAM), or static RAM (SRAM) device. Storage system 1070 may be implemented as a non-volatile storage device such as, but not limited to, one or more of a hard disk drive (HDD), a solid-state drive (SSD), a universal serial bus (USB) drive, an optical disk drive, tape drive, an internal storage device, an attached storage device, flash memory, battery backed-up synchronous DRAM (SDRAM), and/or a network accessible storage device. In some embodiments, storage 1070 may comprise technology to increase the storage performance enhanced protection for valuable digital media when multiple hard drives are included.

Processor 110 may be configured to execute an Operating System (OS) 1080 which may comprise any suitable operating system, such as Google Android (Google Inc., Mountain View, CA), Microsoft Windows (Microsoft Corp., Redmond, WA), Apple OS X (Apple Inc., Cupertino, CA), Linux, or a real-time operating system (RTOS). As will be appreciated in light of this disclosure, the techniques provided herein can be implemented without regard to the particular operating system provided in conjunction with platform 1000, and therefore may also be implemented using any suitable existing or subsequently-developed platform.

Network interface circuit 1040 can be any appropriate network chip or chipset which allows for wired and/or wireless connection between other components of platform 1000 and/or network 1094, thereby enabling platform 1000 to communicate with other local and/or remote computing systems, servers, cloud-based servers, and/or other resources. Wired communication may conform to existing (or yet to be developed) standards, such as, for example, Ethernet. Wireless communication may conform to existing (or yet to be developed) standards, such as, for example, cellular communications including LTE (Long Term Evolution), Wireless Fidelity (Wi-Fi), Bluetooth, and/or Near Field Communication (NFC). Exemplary wireless networks include, but are not limited to, wireless local area networks, wireless personal area networks, wireless metropolitan area networks, cellular networks, and satellite networks.

I/O system 1050 may be configured to interface between various I/O devices and other components of device platform 1000. I/O devices may include, but not be limited to, user interface 1060 and imaging sensor 1090. User interface 1060 may include devices (not shown) such as a microphone (or array of microphones), speaker, display element, touchpad, keyboard, and mouse, etc. I/O system 1050 may include a graphics subsystem configured to perform processing of images for rendering on the display element. Graphics subsystem may be a graphics processing unit or a visual processing unit (VPU), for example. An analog or digital interface may be used to communicatively couple graphics subsystem and the display element. For example, the interface may be any of a high definition multimedia interface (HDMI), DisplayPort, wireless HDMI, and/or any other suitable interface using wireless high definition compliant techniques. In some embodiments, the graphics subsystem could be integrated into processor 110 or any chipset of platform 1000. Imaging sensor 1090 may be configured to capture an image or series of images for further processing by the hybrid combination of processor 110 and analog in-memory AI processor 140, for example to perform inference, recognition, or identification functions.

It will be appreciated that in some embodiments, the various components of platform 1000 may be combined or integrated in a system-on-a-chip (SoC) architecture. In some embodiments, the components may be hardware components, firmware components, software components or any suitable combination of hardware, firmware or software.

The analog in-memory AI processor is configured to perform analog in-memory computations based on neural network weighting factors and input data provided by the CPU, as described previously. AI Processor 140 may include any or all of the circuits/components illustrated in Figures 3, 4 and 7, as described above. These components can be implemented or otherwise used in conjunction with a variety of suitable software and/or hardware that is coupled to or that otherwise forms a part of platform 1000. These components can additionally or alternatively be implemented or otherwise used in conjunction with user I/O devices that are capable of providing information to, and receiving information from, a user.

In some embodiments, these circuits may be installed local to platform 1000, as shown in the example embodiment of Figure 10. Alternatively, platform 1000 can be implemented in a client-server arrangement wherein at least some functionality associated with these circuits is provided to platform 1000 using an applet, such as a JavaScript applet, or other downloadable module or set of sub-modules. Such remotely accessible modules or sub-modules can be provisioned in real-time, in response to a request from a client computing system for access to a given server having resources that are of interest to the user of the client computing system. In such embodiments, the server can be local to network 1094 or remotely coupled to network 1094 by one or more other networks and/or communication channels. In some cases, access to resources on a given network or computing system may require credentials such as usernames, passwords, and/or compliance with any other suitable security mechanism.

In various embodiments, platform 1000 may be implemented as a wireless system, a wired system, or a combination of both. When implemented as a wireless system, platform 1000 may include components and interfaces suitable for communicating over a wireless shared media, such as one or more antennae, transmitters, receivers, transceivers, amplifiers, filters, control logic, and so forth. An example of wireless shared media may include portions of a wireless spectrum, such as the radio frequency spectrum and so forth. When implemented as a wired system, platform 1000 may include components and interfaces suitable for communicating over wired communications media, such as input/output adapters, physical connectors to connect the input/output adaptor with a corresponding wired communications medium, a network interface card (NIC), disc controller, video controller, audio controller, and so forth. Examples of wired communications media may include a wire, cable metal leads, printed circuit board (PCB), backplane, switch fabric, semiconductor material, twisted pair wire, coaxial cable, fiber optics, and so forth.

Various embodiments may be implemented using hardware elements, software elements, or a combination of both. Examples of hardware elements may include processors, microprocessors, circuits, circuit elements (for example, transistors, resistors, capacitors, inductors, and so forth), integrated circuits, ASICs, programmable logic devices, digital signal processors, FPGAs, logic gates, registers, semiconductor devices, chips, microchips, chipsets, and so forth. Examples of software may include software components, programs, applications, computer programs, application programs, system programs, machine programs, operating system software, middleware, firmware, software modules, routines, subroutines, functions, methods, procedures, software interfaces, application program interfaces, instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power level, heat tolerances, processing cycle budget, input data rates, output data rates, memory resources, data bus speeds, and other design or performance constraints.

Some embodiments may be described using the expression "coupled" and "connected" along with their derivatives. These terms are not intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still cooperate or interact with each other.

The various embodiments disclosed herein can be implemented in various forms of hardware, software, firmware, and/or special purpose processors. For example, in one embodiment at least one non-transitory computer readable storage medium has instructions encoded thereon that, when executed by one or more processors, cause one or more of the analog in-memory computation methodologies disclosed herein to be implemented. The instructions can be encoded using a suitable programming language, such as C, C++, object oriented C, Java, JavaScript, Visual Basic .NET, Beginner's All-Purpose Symbolic Instruction Code (BASIC), or alternatively, using custom or proprietary instruction sets. The instructions can be provided in the form of one or more computer software applications and/or applets that are tangibly embodied on a memory device, and that can be executed by a computer having any suitable architecture. In one embodiment, the system can be hosted on a given website and implemented, for example, using JavaScript or another suitable browser-based technology. For instance, in certain embodiments, the system may leverage processing resources provided by a remote computer system accessible via network 1094. In other embodiments, the functionalities disclosed herein can be incorporated into other software applications, such as, for example, automobile control/navigation, smart-home management, entertainment, and robotic applications. The computer software applications disclosed herein may include any number of different modules, sub-modules, or other components of distinct functionality, and can provide information to, or receive information from, still other components. These modules can be used, for example, to communicate with input and/or output devices such as an imaging sensor, a display screen, a touch sensitive surface, a printer, and/or any other suitable device. Other componentry and functionality not reflected in the illustrations will be apparent in light of this disclosure, and it will be appreciated that other embodiments are not limited to any particular hardware or software configuration. Thus, in other embodiments platform 1000 may comprise additional, fewer, or alternative subcomponents as compared to those included in the example embodiment of Figure 10.

The aforementioned non-transitory computer readable medium may be any suitable medium for storing digital information, such as a hard drive, a server, a flash memory, and/or random-access memory (RAM), or a combination of memories. In alternative embodiments, the components and/or modules disclosed herein can be implemented with hardware, including gate level logic such as a field-programmable gate array (FPGA), or alternatively, a purpose-built semiconductor such as an application-specific integrated circuit (ASIC). Still other embodiments may be implemented with a microcontroller having a number of input/output ports for receiving and outputting data, and a number of embedded routines for carrying out the various functionalities disclosed herein. It will be apparent that any suitable combination of hardware, software, and firmware can be used, and that other embodiments are not limited to any particular system architecture.

Some embodiments may be implemented, for example, using a machine readable medium or article which may store an instruction or a set of instructions that, if executed by a machine, may cause the machine to perform a method, process, and/or operations in accordance with the embodiments. Such a machine may include, for example, any suitable processing platform, computing platform, computing device, processing device, computing system, processing system, computer, process, or the like, and may be implemented using any suitable combination of hardware and/or software. The machine readable medium or article may include, for example, any suitable type of memory unit, memory device, memory article, memory medium, storage device, storage article, storage medium, and/or storage unit, such as memory, removable or non-removable media, erasable or non-erasable media, writeable or rewriteable media, digital or analog media, hard disk, floppy disk, compact disk read only memory (CD-ROM), compact disk recordable (CD-R) memory, compact disk rewriteable (CD-RW) memory, optical disk, magnetic media, magneto-optical media, removable memory cards or disks, various types of digital versatile disk (DVD), a tape, a cassette, or the like. The instructions may include any suitable type of code, such as source code, compiled code, interpreted code, executable code, static code, dynamic code, encrypted code, and the like, implemented using any suitable high level, low level, object oriented, visual, compiled, and/or interpreted programming language.

Unless specifically stated otherwise, it may be appreciated that terms such as "processing," "computing," "calculating," "determining," or the like refer to the action and/or process of a computer or computing system, or similar electronic computing device, that manipulates and/or transforms data represented as physical quantities (for example, electronic) within the registers and/or memory units of the computer system into other data similarly represented as physical entities within the registers, memory units, or other such information storage transmission or displays of the computer system. The embodiments are not limited in this context.

The terms "circuit" or "circuitry," as used in any embodiment herein, are functional and may comprise, for example, singly or in any combination, hardwired circuitry, programmable circuitry such as computer processors comprising one or more individual instruction processing cores, state machine circuitry, and/or firmware that stores instructions executed by programmable circuitry. The circuitry may include a processor and/or controller configured to execute one or more instructions to perform one or more operations described herein. The instructions may be embodied as, for example, an application, software, firmware, etc. configured to cause the circuitry to perform any of the aforementioned operations. Software may be embodied as a software package, code, instructions, instruction sets and/or data recorded on a computer-readable storage device. Software may be embodied or implemented to include any number of processes, and processes, in turn, may be embodied or implemented to include any number of threads, etc., in a hierarchical fashion. Firmware may be embodied as code, instructions or instruction sets and/or data that are hard-coded (e.g., nonvolatile) in memory devices. The circuitry may, collectively or individually, be embodied as circuitry that forms part of a larger system, for example, an integrated circuit (IC), an application-specific integrated circuit (ASIC), a system-on-a-chip (SoC), desktop computers, laptop computers, tablet computers, servers, smart phones, etc. Other embodiments may be implemented as software executed by a programmable control device. In such cases, the terms "circuit" or "circuitry" are intended to include a combination of software and hardware such as a programmable control device or a processor capable of executing the software. As described herein, various embodiments may be implemented using hardware elements, software elements, or any combination thereof. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth.

Numerous specific details have been set forth herein to provide a thorough understanding of the embodiments. It will be understood by an ordinarily-skilled artisan, however, that the embodiments may be practiced without these specific details. In other instances, well known operations, components and circuits have not been described in detail so as not to obscure the embodiments. It can be appreciated that the specific structural and functional details disclosed herein may be representative and do not necessarily limit the scope of the embodiments. In addition, although the subject matter has been described in language specific to structural features and/or methodological acts, it is to be understood that the subject matter defined in the appended claims is not necessarily limited to the specific features or acts described herein. Rather, the specific features and acts described herein are disclosed as example forms of implementing the claims.

### Further Example Embodiments

The following examples pertain to further embodiments, from which numerous permutations and configurations will be apparent.
Example 1 is a hybrid artificial intelligence (AI) processing system comprising: a central processing unit (CPU); and an AI processor coupled to the CPU, the AI processor to perform analog in-memory computations based on (1) neural network (NN) weighting factors provided by the CPU and (2) input data provided by the CPU.
Example 2 includes the subject matter of Example 1, wherein the AI processor comprises one or more NN layers, at least one of the one or more NN layers including: a first digital access circuit to receive, from the CPU, a subset of the weighting factors, the subset associated with the corresponding NN layer; a first memory circuit to store the subset of the weighting factors; a first bit line processor (BLP) associated with the first memory circuit, the first BLP to generate a first sequence of vectors of analog voltage values, each of the first sequence of vectors associated with a column of the first memory circuit; a second digital access circuit to receive data associated with the corresponding NN layer; a second memory circuit to store the data associated with the corresponding NN layer; a second bit line processor (BLP) associated with the second memory circuit, the second BLP to generate a second sequence of vectors of analog voltage values, each of the second sequence of vectors associated with a column of the second memory circuit; and a cross bit line processor (CBLP) to calculate a sequence of analog dot products, each of the analog dot products calculated between one of the first sequence of vectors and one of the second sequence of vectors.
Example 3 includes the subject matter of Examples 1 or 2, wherein the analog voltage values of the first sequence of vectors are generated in parallel and the analog voltage values of the second sequence of vectors are generated in parallel.
Example 4 includes the subject matter of any of Examples 1-3, wherein the analog dot products, of the sequence of analog dot products, are calculated in parallel.
Example 5 includes the subject matter of any of Examples 1-4, wherein the data associated with one of the NN layers is a subset of the input data provided by the CPU.
Example 6 includes the subject matter of any of Examples 1-5, wherein the data associated with one of the NN layers is a result of the analog in-memory computations generated by another of the NN layers.
Example 7 includes the subject matter of any of Examples 1-6, wherein the NN layers further include a third digital access circuit to provide a result of the analog in-memory computations to the CPU or to another of the NN layers.
Example 8 includes the subject matter of any of Examples 1-7, wherein at least one of the NN layers is a convolutional NN layer.
Example 9 includes the subject matter of any of Examples 1-8, wherein at least one of the NN layers is a fully connected NN layer.
Example 10 includes the subject matter of any of Examples 1-9, wherein at least one of the NN layers further includes a Rectified Linear Unit (ReLU) to perform thresholding on the sequence of analog dot products.
Example 11 includes the subject matter of any of Examples 1-10, wherein at least one of the NN layers further includes a pooling logic circuit to perform maximum pooling on the thresholded sequence of analog dot products.
Example 12 includes the subject matter of any of Examples 1-11, wherein the CPU is an x86-architecture processor.
Example 13 includes the subject matter of any of Examples 1-12, wherein the CPU is to generate the weighting factors for training of the AI processor.
Example 14 is an integrated circuit or chip set comprising the system of any of Examples 1-13.
Example 15 is a virtual assistant comprising the system of any of Examples 1-13.
Example 16 is an analog in-memory neural network (NN) layer comprising: a first digital access circuit to receive, from a central processing unit (CPU), weighting factors associated with the NN layer; a first memory circuit to store the weighting factors; a first bit line processor (BLP) associated with the first memory circuit, the first BLP to generate a first sequence of vectors of analog voltage values, each of the first sequence of vectors associated with a column of the first memory circuit; a second digital access circuit to receive data associated with the NN layer; a second memory circuit to store the data associated with the NN layer; a second bit line processor (BLP) associated with the second memory circuit, the second BLP to generate a second sequence of vectors of analog voltage values, each of the second sequence of vectors associated with a column of the second memory circuit; and a cross bit line processor (CBLP) to calculate a sequence of analog dot products, each of the analog dot products calculated between one of the first sequence of vectors and one of the second sequence of vectors.
Example 17 includes the subject matter of Example 16, wherein the analog voltage values of the first sequence of vectors are generated in parallel and the analog voltage values of the second sequence of vectors are generated in parallel.
Example 18 includes the subject matter of Examples 16 or 17, wherein the analog dot products, of the sequence of analog dot products, are calculated in parallel.
Example 19 includes the subject matter of any of Examples 16-18, wherein the NN layer is a convolutional NN layer.
Example 20 includes the subject matter of any of Examples 16-19, wherein the NN layer is a fully connected NN layer.
Example 21 includes the subject matter of any of Examples 16-20, wherein the NN layer further includes a Rectified Linear Unit (ReLU) to perform thresholding on the sequence of analog dot products.
Example 22 includes the subject matter of any of Examples 16-21, wherein the NN layer further includes a pooling logic circuit to perform maximum pooling on the thresholded sequence of analog dot products.
Example 23 is a multi-layer analog neural network comprising one or more cascaded NN layers of any of Examples 16-22.
Example 24 is an integrated circuit or chip set comprising the network of Example 23.
Example 25 is an on-chip memory or cache comprising the network of Example 23.
Example 26 is a processor comprising the on-chip memory or cache of Example 25.
Example 27 is a processor comprising the network of Example 23.
Example 28 is an artificial intelligence (AI) processing system comprising: a central processing unit (CPU); and an AI processor coupled to the CPU, the AI processor to perform analog in-memory computations based on (1) neural network (NN) weighting factors provided by the CPU and (2) input data provided by the CPU, wherein the AI processor comprises a NN layer, the NN layer including a processor and memory circuitry, the processor to calculate an analog dot product, the analog dot product calculated between first and second vectors associated with respective first and second columns of the memory circuitry.
Example 29 includes the subject matter of Example 28, wherein data stored in one or both of the first and second columns of the memory circuitry is a subset of the input data provided by the CPU.
Example 30 includes the subject matter of Examples 28 or 29, wherein data stored in one or both of the first and second columns of the memory circuitry is a result of analog in-memory computations generated by another of NN layer included in the AI processor.
Example 31 includes the subject matter of any of Examples 28-30, wherein the NN layer is further configured to provide a result of the analog in-memory computations to the CPU or to another of the NN layers.
Example 32 includes the subject matter of any of Examples 28-31, wherein the NN layer further includes a Rectified Linear Unit (ReLU) to perform thresholding on a sequence of analog dot products.
Example 33 includes the subject matter any of Examples 28-32, wherein the NN layer further includes a pooling logic circuit to perform maximum pooling on the thresholded sequence of analog dot products.
Example 34 includes the subject matter of any of Examples 28-33, wherein the CPU is an x86-architecture processor.
Example 35 includes the subject matter of any of Examples 28-34, wherein the CPU is to generate the weighting factors for training of the AI processor.
Example 36 is an integrated circuit or chip set comprising the system of Example 28.
Example 37 is a virtual assistant comprising the system of Example 28.

The terms and expressions which have been employed herein are used as terms of description and not of limitation, and there is no intention, in the use of such terms and expressions, of excluding any equivalents of the features shown and described (or portions thereof), and it is recognized that various modifications are possible within the scope of the claims. Accordingly, the claims are intended to cover all such equivalents. Various features, aspects, and embodiments have been described herein. The features, aspects, and embodiments are susceptible to combination with one another as well as to variation and modification, as will be understood by those having skill in the art. The present disclosure should, therefore, be considered to encompass such combinations, variations, and modifications. It is intended that the scope of the present disclosure be limited not by this detailed description, but rather by the claims appended hereto. Future filed applications claiming priority to this application may claim the disclosed subject matter in a different manner, and may generally include any set of one or more elements as variously disclosed or otherwise demonstrated herein.

## Claims

1. A hybrid artificial intelligence (AI) processing system comprising:
a central processing unit (CPU); and
an AI processor coupled to the CPU, the AI processor to perform analog in-memory computations based on (1) neural network (NN) weighting factors provided by the CPU and (2) input data provided by the CPU.

2. The system of claim 1, wherein the AI processor comprises one or more NN layers, at least one of the one or more NN layers including:
a first digital access circuit to receive, from the CPU, a subset of the weighting factors, the subset associated with the corresponding NN layer;
a first memory circuit to store the subset of the weighting factors;
a first bit line processor (BLP) associated with the first memory circuit, the first BLP to generate a first sequence of vectors of analog voltage values, each of the first sequence of vectors associated with a column of the first memory circuit;
a second digital access circuit to receive data associated with the corresponding NN layer;
a second memory circuit to store the data associated with the corresponding NN layer;
a second bit line processor (BLP) associated with the second memory circuit, the second BLP to generate a second sequence of vectors of analog voltage values, each of the second sequence of vectors associated with a column of the second memory circuit; and
a cross bit line processor (CBLP) to calculate a sequence of analog dot products, each of the analog dot products calculated between one of the first sequence of vectors and one of the second sequence of vectors.

3. The system of claim 2, wherein the analog voltage values of the first sequence of vectors are generated in parallel, the analog voltage values of the second sequence of vectors are generated in parallel, and the analog dot products, of the sequence of analog dot products, are calculated in parallel.

4. The system of claims 2 or 3, wherein the data associated with one of the NN layers is a subset of the input data provided by the CPU.

5. The system of any of claims 2-4, wherein the data associated with one of the NN layers is a result of the analog in-memory computations generated by another of the NN layers.

6. The system of any of claims 2-5, wherein the NN layers further include a third digital access circuit to provide a result of the analog in-memory computations to the CPU or to another of the NN layers.

7. The system of any of claims 2-6, wherein at least one of the NN layers is a convolutional NN layer.

8. The system of any of claims 2-7, wherein at least one of the NN layers is a fully connected NN layer.

9. An analog in-memory neural network (NN) layer comprising:
a first digital access circuit to receive, from a central processing unit (CPU), weighting factors associated with the NN layer;
a first memory circuit to store the weighting factors;
a first bit line processor (BLP) associated with the first memory circuit, the first BLP to generate a first sequence of vectors of analog voltage values, each of the first sequence of vectors associated with a column of the first memory circuit;
a second digital access circuit to receive data associated with the NN layer;
a second memory circuit to store the data associated with the NN layer;
a second bit line processor (BLP) associated with the second memory circuit, the second BLP to generate a second sequence of vectors of analog voltage values, each of the second sequence of vectors associated with a column of the second memory circuit; and
a cross bit line processor (CBLP) to calculate a sequence of analog dot products, each of the analog dot products calculated between one of the first sequence of vectors and one of the second sequence of vectors.

10. The NN layer of claim 9, wherein the analog voltage values of the first sequence of vectors are generated in parallel, the analog voltage values of the second sequence of vectors are generated in parallel, and the analog dot products, of the sequence of analog dot products, are calculated in parallel.

11. The NN layer of claim 9, wherein the NN layer is at least one of a convolutional NN layer and a fully connected NN layer.

12. The NN layer of claim 9, wherein the NN layer further includes a Rectified Linear Unit (ReLU) to perform thresholding on the sequence of analog dot products and a pooling logic circuit to perform maximum pooling on the thresholded sequence of analog dot products.

13. A multi-layer analog neural network comprising one or more cascaded NN layers of any of claims 9-12.

14. An integrated circuit or chip set comprising the network of claim 13.

15. An on-chip memory or cache comprising the network of claim 13.
